# FASCICULE DE BREVET EUROPEEN

(11) **EP 2 028 634 B1**
(45) Date de publication et mention de la délivrance du brevet: **29.09.2010**
(21) Numéro de dépôt: 07114584.1
(22) Date de dépôt: 20.08.2007
(51) Int. Cl.: G09F 9/33, G09F 21/04, B60Q 3/04

(54) **Module d'affichage multi-diodes**
Multi-Dioden-Anzeigemodul
Multi-diode display module

(43) Date de publication de la demande: 25.02.2009
(73) Titulaire: CFG S.A., 1110 Morges (CH)
(72) Inventeur: Frauenknecht, Jean-Marc, 1030, Bussigny-près-Lausanne (CH); Cohen, Marc, 1006, Lausanne (CH)
(74) Mandataire: Vigand, Philippe

(56) Documents cités:
- WO-A-99/08075
- JP-A- 2 040 687
- JP-A- 9 022 260
- US-A- 5 815 072

## Description

### DOMAINE TECHNIQUE

L'invention concerne de manière générale un module d'affichage multi-diodes destiné pour une application à un véhicule à moteur, ou cyclomoteurs avec intégration du module au niveau du tableau de bord. L'invention concerne plus particulièrement des applications pour les cadrans indicateurs du tableau de bord, comme par exemple le compteur de vitesse, le régulateur de vitesse, le compte-tours, la consommation instantanée, moyenne de carburant, etc...

### ARRIERE-PLAN TECHNOLOGIQUE

Il est connu dans l'art antérieur plusieurs types d'indicateurs pour tableau de bord de véhicule automobile. En particulier, les tableaux de bord comprennent un ou plusieurs cadrans indicateurs pour fournir des informations continues ou liées à une telle information comme par exemple, la vitesse du véhicule, la vitesse programmée au moyen d'un régulateur, la consommation instantanée de carburant ou encore le régime du moteur, i.e. compte-tours, ou encore la quantité de carburant restant, i.e. jauges à essence, etc. On comprendra ici par information continue une information dont la valeur varie de manière sensiblement continue et non discrète. Ce type de cadrans indicateurs comprend des indications numériques discrètes croissantes, séparées de graduations intermédiaires disposées de manière périphérique au cadran et un élément indicateur se déplaçant en regard de ces indications numériques et graduations. Des aiguilles sont continue avec une bonne précision. En effet, les affichages digitaux bien que fournissant une information précise ne sont pas fréquemment utilisés en raison de leur lisibilité peu sensitive car non continue ainsi que pour leur aspect général peu esthétique.

Le problème rencontré avec un cadran indicateur traditionnel à aiguille(s) est lié aux éléments mécaniques d'entraînement, i.e micromoteur, des éléments indicateurs qui non seulement sont sujets à des ennuis mécaniques mais encore posent des problèmes d'encombrement au niveau de l'épaisseur du tableau de bord. On notera aussi que le facteur coût est également déterminant dans la mesure où les applications finales, par exemple dans le domaine de l'automobile, sont extrêmement concurrentielles.

Un tel problème devient encore plus déterminant pour le cas d'application spécifique, tel un régulateur de vitesse. En effet dans le cadre d'une telle application, il existe dans l'art antérieur une solution consistant à prévoir sous le compteur de vitesse et son aiguille indicatrice de la vitesse, un deuxième mécanisme indicateur comprenant une deuxième aiguille, ou disque tournant, venant indiquer la vitesse programmée par le conducteur du véhicule. Pour une telle application, on comprend bien que les risques de défaillances mécaniques et l'encombrement sont rendus deux fois plus critiques du fait de l'utilisation de deux aiguilles superposées, fonctionnant indépendamment l'une de l'autre.

Il est également connu du document US 5,815,072, un dispositif d'affichage pour véhicule, tel un compteur de vitesse, comprenant de nombreux segments éclairés en deux couleurs ou plus au moyen de LEDs. Les segments sont disposés de manière à afficher une variable telle que la vitesse du véhicule.

Il est par ailleurs connu d'utiliser des indicateurs lumineux à diodes électroluminescentes pour afficher au travers d'un masque des informations témoins sur le tableau de bord, comme par exemple, l'absence d'attache d'une ceinture de sécurité, le serrage du frein à main, l'insuffisance du niveau d'huile, l'allumage des feux, etc.

Néanmoins, l'utilisation de telles diodes électroluminescentes pour indiquer de manière précise des informations continues ou liées à une information continue, telle que la vitesse, une vitesse programmée, la consommation instantanée ou encore le régime moteur, est rendue information continue, telle que la vitesse, une vitesse programmée, la consommation instantanée ou encore le régime moteur, est rendue impossible en raison de la taille de chacune de ces diodes, de l'ordre de quelques millimètres carrés, par rapport à la dimension traditionnelle d'un cadran indicateur de tableau de bord dont les graduations ne sont généralement séparés que par un millimètre au maximum. Ainsi par exemple, dans le cas d'un compteur de vitesse, plus de deux cents graduations couvrent un angle de l'ordre de 240° s'étendant sur une portion de périmètre de l'ordre d'une vingtaine de centimètres.

### RESUME DE L'INVENTION

Le but de la présente invention est de répondre aux inconvénients mentionnés ci-dessus en fournissant un module d'affichage capable d'indiquer de manière précise des informations continues ou liées à une telle information continue, tout en s'affranchissant de l'utilisation d'éléments indicateurs mécaniques encombrants.

Dans ce but, un premier aspect de la présente invention concerne un module d'affichage multi-diodes conforme aux caractéristiques de la revendication 1. Le module d'affichage multi-diodes comporte un support sous forme de carte de circuit imprimé monolithique dont une première face est munie de plusieurs cavités dans lesquelles sont assemblées au moins une diode électroluminescente nue, en forme de puce, chacune des diodes étant connectée au circuit imprimé de la carte et encapsulée dans la cavité au moyen d'une résine.

Un tel module d'affichage multi-diodes permet grâce à l'utilisation de diodes électroluminescentes nues, sous forme de puce de taille très réduite, car sans aucun empaquetage, de pourvoir le support du module d'un grand nombre de diodes proches les unes des autres, rendant ainsi possible l'indication précise d'une information continue ou une information liée. Les cavités permettent de séparer et de guider le rayonnement des différentes diodes dans la direction désirée. Enfin la résine permet de maintenir et protéger d'une part les diodes dans les cavités, tout en pouvant améliorer et/ou modifier les caractéristiques lumineuses des diodes nues.

Il est prévu d'utiliser la deuxième face du support, opposée à la première, pour supporter une partie au moins du circuit imprimé ainsi que du circuit électronique de commande des diodes, ce qui présente un avantage en termes d'épaisseur du module ainsi qu'en termes d'esthétisme.

Selon un mode de réalisation avantageux, des cavités comprennent au moins deux diodes électroluminescentes nues de couleurs distinctes. A titre de variantes, un pigment et/ou un élément diffusant est mélangé à la résine utilisée afin d'améliorer les caractéristiques de la lumière émise, par exemple par effet de photoluminescence. Avantageusement, l'association des couleurs pourra notamment générer une lumière blanche. De telles solutions permettent d'obtenir des jeux de couleurs entraînant une grande flexibilité dans les possibilités de présenter les informations par le module d'affichage.

Selon un autre mode de réalisation avantageux, le support est constitué d'un matériau opaque autour des cavités voisines contenant des diodes pour empêcher toute diaphonie entre les diodes des différentes cavités. Alternativement, un matériau réfléchissant pourra être utilisé en tant que substrat ou déposé sur le pourtour intérieur des cavités afin non seulement d'éviter la diaphonie entre diodes mais aussi pour en accroître le rendement lumineux.

Un deuxième aspect de la présente invention concerne un élément d'affichage d'un tableau de bord de véhicule automobile comprenant un module d'affichage selon le premier aspect de l'invention, caractérisé en ce que l'élément d'affichage fournit une information continue ou une information programmée liée à une information continue. On comprendra par élément d'affichage, un ou plusieurs cadrans indicateurs, jauges, graduations, ou témoins du tableau de bord. En outre, l'élément d'affichage peut également fournir une information témoin.

Selon un mode de réalisation avantageux, l'élément d'affichage comprend sur la deuxième face du support un connecteur destiné à être connecté avec l'électronique du tableau de bord. Cette solution présente l'avantage de ne pas augmenter l'épaisseur de l'élément lors de son intégration sur le tableau de bord.

Un troisième aspect de la présente invention concerne un cadran indicateur d'un tableau de bord de véhicule automobile, comportant des indications numériques discrètes et croissantes disposées de manière périphérique au cadran, au moins un élément indicateur se déplaçant en regard des indications numériques et un module d'affichage selon le premier aspect de l'invention, caractérisé en ce que les diodes électroluminescentes nues (15, 16) fournissent de manière précise et peu coûteuse une indication relative à une information continue et / ou une information liée à une information continue.

Selon un mode de réalisation avantageux, le support présente en périphérie au moins un côté formant un arc de cercle, des cavités étant agencées à la périphérie du support le long de l'arc de cercle. Selon une variante préférée, les cavités agencées le long de l'arc de cercle sont allongées et orientées perpendiculairement, i.e. dans le sens de la longueur de la cavité, à l'arc de cercle. Une telle disposition des diodes permet de fournir une indication très précise d'une information continue ou une information liée à une telle information continue. Une telle solution est applicable à des cadrans indicateurs de tableau de bord, tels qu'un compteur de vitesse, un régulateur de vitesse, un compte-tours, un dispositif d'aide au parcage ou encore un indicateur de la consommation instantanée.

Selon un autre mode de réalisation avantageux, les diodes électroluminescentes sont directement utilisées comme élément indicateur du cadran, ce qui permet de s'affranchir de l'utilisation d'un organe mécanique indicateur pour cette information.

Un quatrième aspect de la présente invention concerne un tableau de bord de véhicule automobile comprenant un module d'affichage selon le premier aspect de l'invention, caractérisé en ce que le module d'affichage est utilisé comme rétro éclairage au travers d'un cadran transparent ou translucide.

Selon un mode de réalisation avantageux, le tableau de bord de véhicule automobile comprend un élément d'affichage selon le deuxième aspect de l'invention.

Selon un mode de réalisation avantageux, le tableau de bord de véhicule automobile comprend un cadran indicateur selon le troisième aspect de l'invention.

### BREVE DESCRIPTION DES FIGURES

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :
- la figure 1 représente la face supérieure d'un module d'affichage selon un mode de réalisation préféré de l'invention;
- la figure 1a représente un agrandissement de la disposition des cavités à la périphérie du module;
- la figure 2 représente la face inférieure d'un module d'affichage selon un mode de réalisation préféré de l'invention;
- la figure 3 représente un cadran indicateur de vitesse avec régulateur de vitesse selon une première variante de réalisation.

### DESCRIPTION DETAILLEE DE L'INVENTION

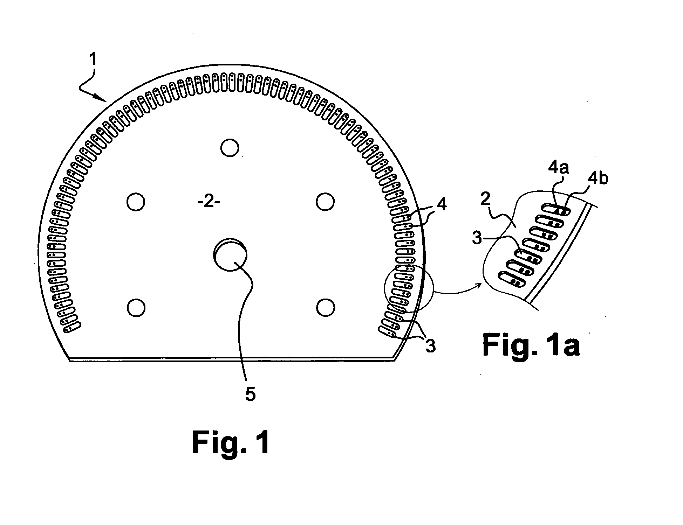

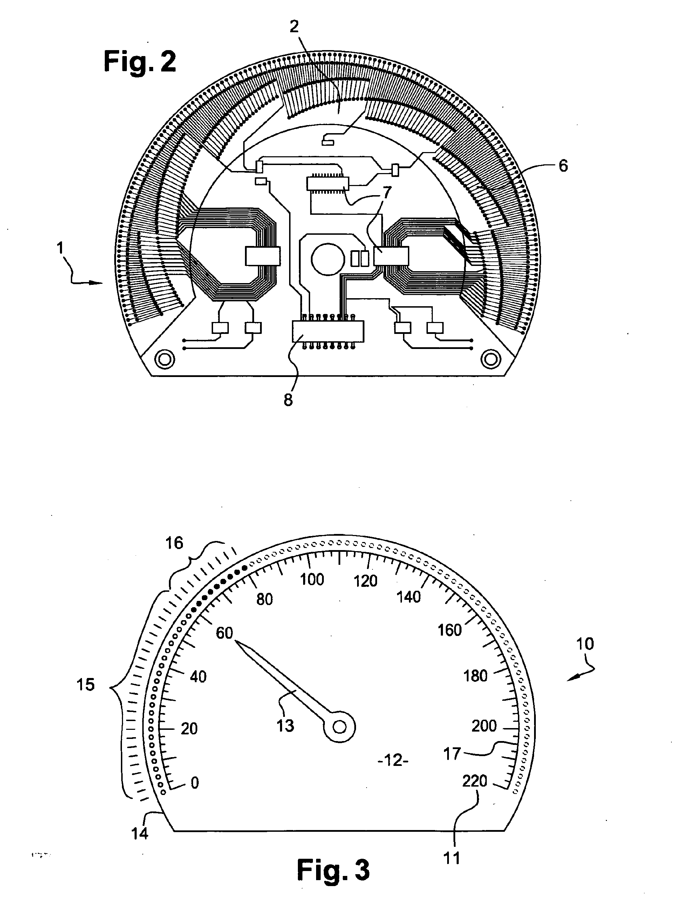

L'invention sera décrite ci-après uniquement à titre d'exemple non limitatifs en relation avec les figures 1 à 3. Sur la figure 1, est représentée la face supérieure d'un module d'affichage multi-diodes selon un mode de réalisation préféré de l'invention. Le module d'affichage 1 comprend un support 2 sous forme de carte de circuit imprimé ou PCB, i.e. "Printed Circuit Board" selon la terminologie anglaise, dont la face supérieure est visible sur cette figure. Le support est muni de nombreuses cavités 3 dans lesquelles sont montées au moins une diode électroluminescente nue 4, en forme de puce, chacune des diodes 4 étant connectée au circuit imprimé de la carte disposé sur l'autre face du support (figure 2) puis encapsulée dans la cavité au moyen d'une résine transparente (non visible). Les diodes électroluminescentes ou, alternativement, d'autres composants tel que par exemple un capteur de luminosité ambiante comme il sera décrit plus loin, sont assemblées selon des procédés d'assemblage microélectronique tels que par montage direct sur carte ou "Chip On Board" (COB) selon la terminologie anglaise, par microcâblage ou "Wire Bonding", ou encore par soudage sur puce retournée ou 'Flip Chip', etc. Le support peut présenter une ouverture centrale 3 pour permettre le passage d'un élément indicateur 5 éventuel.

Selon ce mode de réalisation préféré, l'idée repose sur l'utilisation de diodes électroluminescentes nues de petites tailles sur le pourtour d'un cadran pour fournir des indications précises relatives à une information continue ou liée à une telle information continue. Par exemple, un tel module d'affichage peut être intégré dans le tableau de bord d'un véhicule automobile et fournir au conducteur des informations par le jeu de diodes. On notera que l'utilisation de diodes électroluminescentes nues, qui sont de petites tailles, de l'ordre de 0,2 mm à 0,4 mm de côté, permet l'intégration de plusieurs diodes sur une surface d'environ 1 mm² et permet ainsi une très forte densité d'implantation comparativement à l'utilisation de composants traditionnels montés en surface (CMS). De plus l'utilisation des procédés d'assemblage microélectronique (COB, Wire Bonding) assure une très bonne homogénéité des caractéristiques des diodes sur tout le module tant au niveau de leur couleur que de leur intensité, car elles sont prélevées lors de l'assemblage dans une zone limitée du support (ou wafer) de fabrication des diodes, i.e. sur quelques millimètres carrés.

Dans les cavités, il est prévu une résine optique, servant de protection mécanique et assurant un effet thermique et un effet optique par diffusion, et éventuellement le mélange, de la lumière émise par la ou les diodes que la résine recouvre. Dans la résine, un pigment peut être ajouté pour homogénéiser la couleur émise ou pour obtenir la couleur désirée, comme par exemple du blanc obtenu à partir de deux diodes de couleurs et du pigment. En outre, la résine est choisie de manière à ne pas jaunir avec le temps et pour résister à des domaines de température ambiante satisfaisants aux conditions des applications automobiles, i.e. de -40° à +105° C.

De préférence, le support 2 est constitué d'un matériau opaque, au moins autour des cavités contenant des diodes de manière à empêcher toute diaphonie entre diodes voisines. De plus, un matériau blanc ou réfléchissant peut être utilisé sur le pourtour intérieur des cavités, ce qui a comme effet additionnel d'améliorer le rendement pour chaque diode. On notera encore qu'une plaque en matière plastique peut être ajoutée pour guider la lumière à travers le support ou le cadran sur lequel est monté le module. Un masque de matière plastique avec une impression ou une sérigraphie, ou de matière métallique ajouré par fraisage, étampage ou usinage chimique, peut également être appliqué dans le but de créer des dispositions et/ou des formes de pixels particulières.

La figure 1a représente un agrandissement de la disposition des cavités 3 à la périphérie du module d'affichage. Chacune des cavités 3 comprend deux diodes électroluminescentes nues 4a et 4b de couleurs distinctes. Les diodes sont disposées à l'intérieur des cavités par exemple par collage à l'aide d'une colle époxy electro-conductive ou non, et connectées par exemple par microcâblage (Wire Bonding) puis encapsulées au moyen d'une résine non représentée.

Un tel module d'affichage est destiné à afficher de préférence des informations continues, telle que la vitesse, la consommation instantanée, le régime moteur, ou une information liée à une information continue, telle que la vitesse programmée d'un régulateur de vitesse. Pour que les diodes électroluminescentes nues soient disposées en regard des graduations d'un cadran indicateur de telles informations, il est prévu pour cela que le support 2 présente en périphérie au moins un côté formant un arc de cercle, des cavités étant agencées à la périphérie du support le long de l'arc de cercle. Avantageusement, en vue d'obtenir un maximum de précision dans l'affichage de l'information désiré, les cavités ont une forme allongée et sont orientées perpendiculairement, i.e. dans le sens de la longueur de la cavité, préférentiellement oblongue, à l'arc de cercle formé par le côté du support. On notera que cette disposition n'est cependant pas limitative car la disposition et la forme des cavités peuvent êtres réalisées selon les besoins du concepteur de l'application.

La figure 2 représente la face inférieure d'un module d'affichage 1 tel que décrit en liaison avec les figures 1 et 1a. Le support 2 comprend une face inférieure, opposée à la face supérieure, supportant au moins en partie et de préférence l'intégralité du circuit imprimé 6 et des composants du circuit électronique de commande 7 des diodes électroluminescentes nues 4a et 4b.

La face inférieure cachée du module d'affichage 1 sert pour les connexions avec l'électronique du tableau de bord du véhicule par l'intermédiaire d'un connecteur 8 servant d'interface entre le module d'affichage et l'extérieur, i.e. le tableau de bord. Le circuit de commande 7 des diodes est composé essentiellement de circuits d'alimentation régulés, multiplexeurs et circuits logiques disposés adéquatement pour commander les diodes. On utilisera de préférence une alimentation en courant constant pour homogénéiser l'intensité des diodes. Pour surmonter le problème lié à l'utilisation de plusieurs centaines de diodes, l'idée consiste à réaliser un circuit de commande matriciel, multiplexé ligne par ligne et alimenté par des sources à courant constant colonne par colonne (ou inversement). Une telle disposition permet d'activer individuellement chaque diode avec un nombre limité de composants. Les méthodes de séquencement s'apparentent à celles utilisées pour l'activation de cellules à cristaux liquides. Alternativement, le système électronique de commande des diodes électroluminescentes peut être de type matriciel multiplexé. Une (ou plusieurs) commande(s) supplémentaire(s) à modulation de largeur d'impulsion (PWM ou Pulse Width Modulation) et synchrone avec le séquencement permet de varier l'intensité lumineuse des diodes, tout en conservant l'avantage d'une régulation à courant constant du courant direct instantané des diodes.

Un module d'affichage tel que présenté en liaison avec les figures 1, 1a et 2 présente de nombreuses caractéristiques avantageuses notamment sur le plan mécanique, sur le plan optique et sur le plan électronique qui vont être détaillées ci-après.

Concernant les caractéristiques mécaniques, il est prévu d'utiliser une carte monolithique de faible épaisseur grâce à l'incorporation de diodes électroluminescentes nues sous forme de puce encapsulées avec une résine optique. La face supérieure est plate, ce qui favorise grandement la flexibilité du design dans l'application finale, en particulier pour son intégration dans un tableau de bord de véhicule automobile. En outre, tous les composants du circuit de commande sont avantageusement sur la face arrière et présentent une épaisseur réduite. Enfin l'ensemble de la conception est aisément adaptable aux configurations particulières d'une application spécifique tout en étant robuste car essentiellement basé sur des méthodes et procédés d'assemblages fiabilisés et des composants standard.

Concernant les caractéristiques optiques, il est prévu d'utiliser des diodes électroluminescentes nues de couleurs, avec des combinaisons possibles au choix du client, et cela sans aucune limitation au niveau du circuit de commande. Ainsi, il est possible d'activer les diodes dans n'importe quel ordre, de réaliser des jeux de couleurs ou tout autre effet visuel souhaité. En outre, l'utilisation de diodes nues autorise une grande flexibilité dans l'agencement de ces diodes en raison de leur très faible encombrement, nettement inférieure à ou de l'ordre de 0,16mm² suivant les modèles. Enfin, de telles diodes électroluminescentes nues, en forme de puce, sont assemblées et connectées sur la carte de circuit imprimé par des technologies et machines prévues pour l'assemblage microélectronique, ce qui permet une grande précision pour la disposition de ces diodes, à savoir une tolérance de positionnement mécanique inférieure à 40 microns. Ainsi, l'effet optique souhaité peut être réalisé très finement et très précisément.

Concernant les caractéristiques électroniques, il est à noter que le circuit de commande des diodes est peu coûteux et permet une grande flexibilité de conception, dans la mesure où il peut être facilement adapté en fonction du nombre et des couleurs des diodes à commander tout en utilisant des composants standards. En outre, le circuit présente une interface utilisateur simple ne nécessitant qu'une seule source d'alimentation, utilisant un bus d'interface périphérique sérielle, et par exemple une technique de modulation de largeur d'impulsion pour graduer l'intensité lumineuse des diodes, qui peut varier selon les couleurs, ainsi que des signaux de commande simples.

On comprendra donc que la solution ici développée est valable pour de nombreuses applications et plus particulièrement pour des éléments d'affichages d'un tableau de bord de véhicule automobile. En effet, cette solution présente comme avantage d'avoir une faible épaisseur qui s'intègre très bien dans un tableau de bord. Elle permet en outre une grande précision de positionnement des diodes et permet donc de fournir de manière précise une information continue ou liée à une information continue par l'utilisation d'une grande densité de diodes qui sont d'une dimension intégrée très réduite en comparaison des composants traditionnels montés en surface.

Comme cela va être expliqué en liaison avec la figure 3, cette solution de module d'affichage est d'autant plus avantageuse pour des indications nécessitant un grand nombre d'informations dans un espace restreint, comme un compteur de vitesse équipé avec un régulateur de vitesse.

La figure 3 représente un exemple d'application spécifique à un cadran indicateur de vitesse équipé avec un régulateur de vitesse selon une première variante préférée de réalisation. Le compteur de vitesse 10 représenté est standard, il comporte des indications numériques 11 discrètes et croissantes, pouvant être séparées de graduations intermédiaires 17, les indications et graduations éventuelles étant disposées de manière périphérique au cadran 12, et un élément indicateur, i.e. une aiguille 13, se déplaçant en regard des indications numériques. Un module d'affichage 14 semblable à celui présenté à titre d'exemple en liaison avec les figures précédentes est incorporé sous le cadran 12. Avantageusement les diodes électroluminescentes nues sont disposées en regard des indications numériques et graduations intermédiaires de manière à pouvoir fournir une information la plus précise possible.

Ainsi par exemple, dans le cas d'un régulateur de vitesse automatique, l'aiguille 13 permet d'indiquer la vitesse du véhicule, 60 km/h dans cet exemple, tandis que les diodes électroluminescentes 15 sont allumées pour fournir la vitesse régulée programmée par l'utilisateur, 60 km/h sur cet exemple, le véhicule ayant atteint la vitesse programmée. Les diodes 15 peuvent être allumées de différentes manières. Si chaque cavité ne contient qu'une seule diode, l'indication de la vitesse régulée pourra être réalisé par exemple par un allumage progressif des diodes 15 depuis celle disposée en regard de l'indication numérique "0" jusqu'à celle disposée en regard de l'indication "60". Tout autre effet optique permettant d'indiquer clairement la vitesse régulée au conducteur pourra être également réalisé, comme par exemple l'allumage unique de la diode disposée en regard de l'indication numérique "60".

Alternativement, si les cavités contiennent chacune deux diodes de couleurs différentes, des combinaisons de couleurs pourront être obtenues suivant l'effet désiré. A titre d'exemple, il est possible d'allumer certaines diodes 15 avec une couleur ou une combinaison de couleurs pour indiquer, simultanément avec l'aiguille 13 (qui devient alors facultative), la vitesse actuelle du véhicule, 60 km/h dans cet exemple, tandis que certaines diodes 16 sont également allumées avec une autre couleur ou une combinaison de couleurs, de manière à être visible avec une couleur différente pour l'utilisateur de celle des diodes 15. Ces diodes 16 indiquent alors par exemple la vitesse programmée par l'utilisateur, ici 80 km/h. On comprendra que les effets optiques et possibilités d'indication sont nombreuses et limitées uniquement par l'imagination.

Par ailleurs, dans le cas d'un régulateur de vitesse dynamique, c'est-à-dire s'adaptant à la vitesse du véhicule précédent le véhicule équipé d'un tel régulateur, les diodes permettent facilement d'indiquer au conducteur quelle est la vitesse programmée par ses soins ainsi que la vitesse régulée en fonction de celle du véhicule précédent. Dans ce cas particulier, sur cette même figure 3, l'aiguille 13 indique toujours la vitesse actuelle du véhicule, tandis que les diodes 15 allumées sont visibles avec une première couleur (pouvant être une combinaison de couleurs) et indiquent la vitesse régulée de manière dynamique par le véhicule en fonction de la vitesse du véhicule qui le précède, Et dans le même temps, les diodes 16 également allumées sont visibles avec une autre couleur (pouvant être une combinaison de couleurs) différente de celle des diodes 15, de manière à indiquer la vitesse programmée par le conducteur avant le contrôle dynamique de la vitesse par le véhicule.

On comprendra que diverses modifications et / ou améliorations évidentes pour l'homme du métier peuvent être apportées aux différentes modes de réalisation de l'invention décrits dans la présente description sans sortir du cadre de l'invention défini par les revendications annexées. En particulier, il est possible en outre d'utiliser un tel module d'affichage comme rétro éclairage du tableau de bord ou des cadrans indicateurs du tableau de bord au travers d'une couche transparente ou translucide recouvrant ces éléments, par l'ajout de quelques dizaines de diodes réparties adéquatement sur la face supérieure de la carte de circuit imprimé. Il est également possible d'ajouter un détecteur de lumière ambiante pour pouvoir ajuster la luminosité du tableau de bord par variation de l'intensité des diodes utilisées pour le rétroéclairage, ou comme diodes indicatrices d'une information. De la même manière de tels modules d'affichage pourront servir en outre de pointeur ou de d'indicateur témoin sur le tableau de bord.

On pourra noter encore l'utilisation possible d'un microprocesseur avec microprogramme dédicacé permettant l'activation du module d'affichage à travers de simples macro-commandes directement accessibles pour l'utilisateur, par exemple par commande au volant.

Enfin, on notera que la disposition des cavités en arc de cercle en périphérie du support n'est qu'une alternative parmi d'autres ainsi que la forme oblongue des cavités.

## Revendications

1. Module d'affichage (1) multi-diodes comprenant un support (2) sous forme de carte de circuit imprimé dont une première face est munie de plusieurs cavités (3) dans lesquelles sont assemblées au moins une diode électroluminescente nue (4), en forme de puce, chacune des diodes étant connectée au circuit imprimé de la carte et encapsulée dans la cavité au moyen d'une résine,
**caractérisé en ce que** le support est sous forme de carte monolithique, qui comprend une deuxième face, opposée à la première, supportant au moins en partie le circuit imprimé (6) et un circuit électronique de commande (7) des diodes électroluminescentes nues.

2. Module d'affichage multi-diodes selon la revendication 1, **caractérisé en ce que** des cavités comprennent au moins deux diodes électroluminescentes nues (4a, 4b) de couleurs distinctes.

3. Module d'affichage multi-diodes selon la revendication 2, **caractérisé en ce que** la résine est mélangée à un pigment et/ou un élément diffusant d'une troisième couleur différente de celles des deux diodes.

4. Module d'affichage multi-diodes selon l'une des revendications 1 à 3, **caractérisé en ce que** le support est constitué d'un matériau opaque autour des cavités voisines contenant des diodes et / ou un matériau réfléchissant sur le pourtour intérieur des cavités.

5. Elément d'affichage d'un tableau de bord de véhicule automobile comprenant un module d'affichage selon l'une des revendications précédentes, **caractérisé en ce que** l'élément d'affichage fournit une information continue ou une information programmée liée à une information continue.

6. Elément d'affichage selon la revendication 5, **caractérisé en ce qu'**il fournit en outre une information témoin.

7. Elément d'affichage selon la revendication 6, **caractérisé en ce que** l'élément d'affichage comprend sur la deuxième face du support un connecteur (8) destiné à être connecté avec l'électronique du tableau de bord.

8. Cadran indicateur (12) d'un tableau de bord de véhicule automobile, comportant des indications numériques (11) discrètes et croissantes disposées de manière périphérique au cadran, un élément indicateur (13) se déplaçant en regard des indications numériques et un module d'affichage selon l'une des revendications 1 à 4, **caractérisé en ce que** les diodes électroluminescentes nues (15, 16) fournissent une indication relative à une information continue et / ou une information liée à une information continue.

9. Cadran indicateur selon la revendication 8, **caractérisé en ce que** le support du module d'affichage présente en périphérie au moins un côté formant un arc de cercle et **en ce que** des cavités sont agencées à la périphérie du support le long de l'arc de cercle.

10. Cadran indicateur selon la revendication 9, **caractérisé en ce que** les cavités agencées le long de l'arc de cercle sont allongées et orientées perpendiculairement, i.e. dans le sens de la longueur de la cavité, à l'arc de cercle.

11. Cadran indicateur selon l'une des revendications 8 à 10, **caractérisé en ce que** les diodes électroluminescentes sont utilisées comme élément indicateur du cadran.

12. Tableau de bord de véhicule automobile comprenant un module d'affichage selon l'une des revendications 1 à 4, **caractérisé en ce que** le module d'affichage est utilisé comme rétro éclairage au travers d'un cadran transparent ou translucide.

13. Tableau de bord de véhicule automobile comprenant un élément d'affichage selon l'une des revendications 5 à 7.

14. Tableau de bord de véhicule automobile comprenant un cadran indicateur selon l'une des revendications 8 à 11.

15. Tableau de bord selon l'une des revendications 12 à 14, **caractérisé en ce qu'**il comprend un détecteur de lumière ambiante et **en ce que** il est prévu des moyens pour faire varier l'intensité des diodes électroluminescentes en fonction de la lumière ambiante détectée.

16. Tableau de bord selon l'une des revendications 12 à 15, **caractérisé en ce qu'**il est prévu un microprocesseur avec microprogramme dédicacé permettant l'activation du module d'affichage à travers de simples macro-commandes directement accessibles par l'utilisateur.

## Claims

1. A multi-diode display module (1) comprising a support (2) in the form of a printed circuit board whereof a first face is fitted with several cavities (3) in which are assembled at least one bare light-emitting diode (4), in the form of a chip, each of the diodes being connected to the printed circuit of the card and encapsulated in the cavity by means of resin, **characterised in that** the support is in the form of a monolithic card which comprises a second face, opposite to the first face, supporting at least partially the printed circuit (6) and an electronic control circuit (7) of the bare light-emitting diodes.

2. The multi-diode display module as claimed in Claim 1, **characterised in that** cavities comprise at least two bare light-emitting diodes (4a, 4b) of distinct colours.

3. The multi-diode display module as claimed in Claim 2, **characterised in that** the resin is mixed with a pigment and/or a diffusing element of a third colour different to those of the two diodes.

4. The multi-diode display module as claimed in any one of Claims 1 to 3, **characterised in that** the support comprises opaque material around the adjacent cavities containing diodes and/or reflective material on the inner periphery of the cavities.

5. The display module of an instrument panel of an automobile comprising a display module as claimed in any one of the preceding claims, **characterised in that** the display element supplies continuous information or programmed information associated with continuous information.

6. The display module as claimed in Claim 5, **characterised in that** it also provides reference information.

7. The display module as claimed in Claim 6, **characterised in that** the display element comprises on the second face of the support a connector (8) to be connected to the electronics of the instrument panel.

8. An indicator dial (12) of an automobile instrument panel, comprising discrete and increasing digital indications (11) placed peripherally to the dial, an indicator element (13) moving relative to the digital indications and a display module as claimed in any one of Claims 1 to 4, **characterised in that** the bare light-emitting diodes (15, 16) supply an indication relative to a continuous information and/or an information associated with a continuous information.

9. The indicator dial as claimed in Claim 8, **characterised in that** the support of the display module has at its periphery at least one side forming an arc of a circle and **in that** cavities are arranged at the periphery of the support along the arc of a circle.

10. The indicator dial as claimed in Claim 9, **characterised in that** the cavities arranged along the arc of a circle are elongated and oriented perpendicularly, that is, in the direction of the length of the cavity, to the arc of a circle.

11. The indicator dial as claimed in any one of Claims 8 to 10, **characterised in that** the light-emitting diodes are used as indicator element of the dial.

12. An automobile instrument panel comprising a display module as claimed in any one of Claims 1 to 4, **characterised in that** the display module is used as backlighting via a transparent or translucid dial.

13. The automobile instrument panel comprising a display element as claimed in any one of Claims 5 to 7.

14. The automobile instrument panel comprising an indicator dial as claimed in any one of Claims 8 to 11.

15. The instrument panel as claimed in any one of Claims 12 to 14, **characterised in that** it comprises a detector of ambient light and **in that** means are provided for varying the intensity of the diodes light-emitting as a function of the ambient light detected.

16. The instrument panel as claimed in any one of Claims 12 to 15, **characterised in that** a microprocessor with dedicated microprogram for activation of the display module via simple macro-commands directly accessible by the user is provided.

## Patentansprüche

1. Multidioden-Anzeigemodul (1), das einen Träger (2) in Form einer gedruckten Schaltkreiskarte umfasst, deren erste Seite mit mehreren Vertiefungen (3) ausgestattet ist, in denen mindestens eine hüllenlose elektrisch lumineszierende Diode (4) in Chipform montiert ist, wobei jede der Dioden mit dem gedruckten Schaltkreis der Karte verbunden und in der Vertiefung mit einem Harz eingekapselt ist, **dadurch gekennzeichnet, dass** der Träger in monolithischen Kartenform ist, die eine zweite Seite umfasst, die der ersten gegenüberliegt und mindestens teilweise den gedruckten Schaltkreis (6) und einen elektrischen Steuerkreis (7) der hüllenlosen elektrisch lumineszierenden Dioden trägt.

2. Multidioden-Anzeigemodul nach Anspruch 1, **dadurch gekennzeichnet, dass** die Vertiefungen mindestens zwei hüllenlose elektrisch lumineszierende Dioden (4a, 4b) unterschiedlicher Farben umfassen.

3. Multidioden-Anzeigemodul nach Anspruch 2, **dadurch gekennzeichnet, dass** das Harz mit einem Pigment und/oder einem Element gemischt ist, das eine dritte Farbe aussendet, die sich von der der zwei Dioden unterscheidet.

4. Multidioden-Anzeigemodul nach einem der Ansprüche 1 bis 3, **dadurch gekennzeichnet, dass** der Träger aus einem undurchsichtigen Werkstoff um die benachbarten Vertiefungen besteht, die die Dioden enthalten und/oder einem Werkstoff, der auf der inneren Umrandung der Vertiefungen reflektiert.

5. Anzeigeelement eines Kraftfahrzeug-Armaturenbretts, das ein Anzeigemodul nach einem der vorangehenden Ansprüche umfasst, **dadurch gekennzeichnet, dass** das Anzeigeelement eine kontinuierliche Information oder eine programmierte Information liefert, die mit einer kontinuierlichen Information verbunden ist.

6. Anzeigeelement nach Anspruch 5, **dadurch gekennzeichnet, dass** es weiterhin eine Kontrollinformation liefert.

7. Anzeigeelement nach Anspruch 6, **dadurch gekennzeichnet, dass** das Anzeigeelement auf der zweiten Seite des Trägers einen Verbinder (8) umfasst, der dazu bestimmt ist, mit der Elektronik des Armaturenbretts verbunden zu sein.

8. Anzeigeskala (12) eines Kraftfahrzeug-Armaturenbretts, die sprunghafte und numerisch aufsteigende Angaben (11) umfasst, die peripher auf der Skala angeordnet sind, wobei sich ein Anzeigeelement (13) gegenüber den numerischen Angaben verschiebt und ein Anzeigemodul nach einem der Ansprüche 1 bis 4, **dadurch gekennzeichnet, dass** die hüllenlosen elektrisch lumineszierenden Dioden (15, 16) eine Angabe liefern, die sich auf eine kontinuierliche Information und/oder eine mit einer kontinuierlichen Information verbundene Information bezieht.

9. Anzeigeskala nach Anspruch 8, **dadurch gekennzeichnet, dass** der Träger des Anzeigemoduls auf der Peripherie mindestens eine Seite aufweist, die einen Kreisbogen bildet, und dadurch, dass die Vertiefungen an der Peripherie des Trägers entlang des Kreisbogens ausgebildet sind.

10. Anzeigeskala nach Anspruch 9, **dadurch gekennzeichnet, dass** die entlang des Kreisbogens ausgebildeten Vertiefungen länglich sind und senkrecht ausgerichtet, zum Beispiel in Richtung der Länge der Vertiefung, zum Kreisbogen.

11. Anzeigeskala nach einem der Ansprüche 8 bis 10, **dadurch gekennzeichnet, dass** die elektrisch lumineszierenden Dioden als Anzeigeelement der Skala verwendet werden.

12. Kraftfahrzeug-Armaturenbrett, das ein Anzeigemodul nach einem der Ansprüche 1 bis 4 umfasst, **dadurch gekennzeichnet, dass** das Anzeigemodul als Hintergrundbeleuchtung durch eine durchsichtige oder durchscheinende Skala verwendet wird.

13. Kraftfahrzeug-Armaturenbrett, das ein Anzeigeelement nach einem der Ansprüche 5 bis 7 umfasst.

14. Kraftfahrzeug-Armaturenbrett, das eine Anzeigeskala nach einem der Ansprüche 8 bis 11 umfasst.

15. Armaturenbrett nach einem der Ansprüche 12 bis 14, **dadurch gekennzeichnet, dass** es einen Umgebungslichtdetektor umfasst und dadurch, dass Mittel vorgesehen sind, um die Intensität der elektrisch lumineszierenden Dioden in Abhängigkeit vom erfassten Umgebungslicht variieren zu lassen.

16. Armaturenbrett nach einem der Ansprüche 12 bis 15, **dadurch gekennzeichnet, dass** ein Mikroprozessor mit speziellem Mikroprogramm vorgesehen ist, der die Aktivierung des Anzeigemoduls anhand einfacher Makrobefehle erlaubt, auf die der Benutzer direkten Zugriff hat.
